# DEMANDE DE BREVET EUROPEEN

(11) **EP 3 062 538 A1**
(43) Date de publication de la demande: **31.08.2016**
(21) Numéro de dépôt: 15305305.3
(22) Date de dépôt: 27.02.2015
(51) Int. Cl.: H04W 4/00, H04W 12/06, H04L 29/06, H04W 88/06

(54) **Procédé d'authentification, procédé d'autorisation d'accès, terminal, serveur, composant radio-étiquette, produit, produit programme d'ordinateur et support de stockage correspondant**

(71) Demandeur: Thomson Licensing, 92130 Issy-les-Moulineaux (FR)
(72) Inventeur: JEANNE, Ludovic, 35576 Cesson-Sévigné (FR); STEYER, Jean-Marie, 35576 Cesson-Sévigné (FR); ROUSTIDE, Didier, 35576 Cesson-Sévigné (FR)
(74) Mandataire: Huchet, Anne

(57) **Abrégé**

La présente divulgation concerne un procédé d'authentification d'un accès depuis un terminal mobile à un service disponible sur un réseau de communication bidirectionnel.

Selon au moins un mode de réalisation, ledit procédé comprend :
- une acquisition d'au moins une information relative audit service contenue dans une radio étiquette et comprenant au moins:
• une adresse dudit service ;
• un identifiant d'accès audit service, comprenant au moins un identifiant relatif à un produit auquel appartient ladite radio-étiquette ;

- une requête d'accès audit service tenant compte de ladite adresse et comprenant une fourniture dudit identifiant d'accès.

## Description

### 1. Domaine de l'invention

Le domaine de l'invention est relatif à une limitation des accès à un service fourni par un serveur distant.

Un procédé d'authentification, un procédé d'autorisation d'accès, un terminal, un serveur, un composant radio-étiquette, un produit, un produit programme d'ordinateur et un support de stockage correspondant sont décrits.

### 2. Art antérieur

De nombreux fournisseurs de services (appelés ci-après principaux), notamment de services payant comme de la télévision à la demande, souhaitent offrir des services complémentaires à leurs utilisateurs, en lien avec un service principal. Par exemple, dans le cas où le service principal est un service de délivrance de vidéo à la demande (ou VOD pour « Video On Demand » selon la terminologie anglaise), le service peut consister en la fourniture de biographies des acteurs d'un film proposé par le service de VOD, ou de jeux en relation avec les personnages du film. Dans le cas de la diffusion audiovisuelle d'une compétition sportive par une chaîne de télévision spécialisée, à accès payant, il peut s'agir de la rediffusion d'autres compétitions du même domaine sportif. De tels services complémentaires, à valeur ajoutée pour un utilisateur, sont par exemple disponibles via internet, par accès à des sites web particuliers. La connexion à ces sites Web particuliers nécessite souvent la fourniture d'identifiants de connexion (ou « login » selon la terminologie anglaise), comme un nom d'utilisateur et un code secret, par exemple afin de limiter l'accès à un site aux seuls utilisateurs du service principal (notamment lorsque le service principal n'est accessible que par abonnement payant) ou de pouvoir personnaliser le service complémentaire offert en fonction de l'utilisateur qui y accède.

Il est cependant facile à un tiers souhaitant accéder à ces services complémentaires d'usurper les identifiants de connexion d'un des abonnés et donc d'accéder au site sans y être autorisé.

### 3. Résumé de l'invention.

L'invention permet d'améliorer la situation en proposant un procédé permettant, dans au moins un mode de réalisation, de proposer une authentification d'accès à un service de façon plus adaptée, et par exemple plus fiable, que certaines solutions de l'art antérieur.

En particulier, un aspect de la présente divulgation concerne un procédé d'authentification d'un accès depuis un terminal mobile à un service disponible sur un réseau de communication bidirectionnel, ledit terminal mobile comprend au moins une première interface radiofréquence at au moins une seconde interface de communication avec un réseau bidirectionnel.

Selon au moins un mode de réalisation particulier, ledit procédé d'authentification comprend les étapes consistant à:
- acquérir au moins une information relative audit service contenue dans une radio étiquette et comprenant au moins:
   - une adresse dudit service ;
   - un identifiant d'accès audit service, comprenant au moins un identifiant relatif à un produit auquel appartient ladite radio-étiquette ;
- requérir un accès audit service via ladite adresse, en fournissant ledit identifiant d'accès.

Selon au moins un mode de réalisation particulier, ledit procédé d'authentification comprend en outre une étape consistant à authentifier ledit accès, authentifier ledit accès comprenant:
- demander une lecture d'au moins une donnée d'authentification comprise dans une zone mémoire, sécurisée par une clé d'encryptage, de ladite radio-étiquette, demander une lecture comprenant :
   - fournir une clé candidate;
   - obtenir ladite donnée d'authentification lorsque ladite clé candidate correspond à la clé d'encryptage sécurisant ladite zone mémoire ;
- transmettre ladite donnée d'authentification obtenue.

Selon au moins une caractéristique particulière, authentifier ledit accès comprend recevoir ladite clé candidate par ladite seconde interface.

Selon au moins un mode de réalisation particulier, recevoir ladite clé candidate comprend en outre recevoir et mémoriser un identifiant complémentaire de sécurité, et l'étape consistant à requérir un service et/ou l'étape consistant à transmettre ladite donnée d'authentification obtenue comprend une étape consistant à fournir ledit identifiant complémentaire de sécurité mémorisé. Selon au moins une caractéristique particulière, authentifier ledit accès comprend une étape consistant à affecter au moins une clé d'encryptage à la sécurisation d'au moins une zone mémoire de ladite radio-étiquette.
Selon au moins une caractéristique particulière, ledit procédé d'authentification comprend une étape consistant à recevoir, par ladite seconde interface, ladite clé d'encryptage à affecter à la sécurisation de ladite zone mémoire de ladite radio-étiquette et/ou une adresse de ladite zone mémoire sécurisée.

Selon au moins une caractéristique particulière, ledit procédé d'authentification comprend une étape consistant à demander une écriture d'au moins une donnée d'authentification dans une zone mémoire sécurisée de ladite radio-étiquette.

Selon au moins une caractéristique particulière, ledit procédé d'authentification comprend une étape consistant à recevoir, par ladite seconde interface, ladite donnée d'authentification à écrire et/ou ladite adresse de ladite zone mémoire sécurisée.

Selon au moins une caractéristique particulière, ledit procédé d'authentification est mis en oeuvre au moins partiellement par une application d'authentification dudit service téléchargée sur ledit terminal.

Selon un autre aspect, la présente divulgation concerne un terminal de communication comprenant au moins une première interface de communication radiofréquence et au moins une seconde interface de communication avec un réseau bidirectionnel.

Selon un mode de réalisation particulier, ledit terminal comprend un processeur configuré pour:
- acquérir au moins une information contenue dans une radio-étiquette et comprenant au moins:
   - une adresse d'un service disponible sur un réseau de communication bidirectionnel;
   - un identifiant d'accès audit service, comprenant au moins un identifiant relatif à un produit auquel appartient ladite radio-étiquette ;
- requérir un accès audit service, via ladite adresse, en fournissant ledit identifiant d'accès.

Bien que non explicitement décrit, ledit terminal peut être configuré pour mettre en oeuvre le procédé d'authentification de la présente divulgation dans l'un quelconque de ses modes de réalisation.

Selon un autre aspect, la présente divulgation concerne un procédé d'autorisation d'accès à un service disponible sur un serveur appartenant à un réseau de communication bidirectionnel, ledit procédé étant mis en oeuvre sur ledit serveur et comprenant les étapes consistant à:
- recevoir une requête d'accès audit service, ladite requête comprenant au moins:
   - une adresse désignant ledit service sur ledit serveur;
   - un identifiant d'accès audit service, comprenant au moins un identifiant relatif à un produit auquel appartient ladite étiquette électronique ;
- comparer ledit identifiant d'accès avec au moins identifiant déterminé autorisant un accès audit service.

Selon un mode de réalisation particulier, ledit procédé d'autorisation comprend les étapes consistant à:
- obtenir une association dudit identifiant déterminé avec au moins une donnée d'authentification et une clé d'encryptage de ladite donnée d'authentification, ladite donnée d'authentification et ladite clé d'encryptage ayant un format adapté à un stockage de ladite donnée d'authentification dans une zone mémoire, sécurisée par ladite clé d'encryptage, d'une radio-étiquette,
- recevoir une première donnée candidate ;
- autoriser un accès audit service lorsque ladite première donnée candidate reçue correspond à ladite donnée d'authentification associée audit identifiant déterminé.

Selon un mode de réalisation particulier, ledit procédé d'autorisation comprend en outre, lorsque ledit identifiant d'accès correspond audit identifiant déterminé, préalablement à l'étape consistant à recevoir une première donnée candidate, une étape consistant à émettre ladite clé d'encryptage associée audit identifiant déterminé.

Selon un mode de réalisation particulier, émettre ladite clé d'encryptage comprend émettre et mémoriser un identifiant complémentaire de sécurité identifiant ladite clé d'encryptage et le procédé d'autorisation comprend, en absence de réception d'une première donnée candidate ou lorsque ladite première donnée candidate reçue ne correspond pas à ladite donnée d'authentification, des étapes consistant à :
- comparer une donnée complémentaire reçue dans ladite requête ou avec ladite donnée candidate avec au moins un identifiant complémentaire de sécurité mémorisé ;
- lorsque ladite donnée complémentaire correspond à un identifiant complémentaire de sécurité :
   - émettre ladite clé d'encryptage identifiée par ledit identifiant complémentaire de sécurité mémorisé correspondant ;
   - recevoir une seconde donnée candidate ;
   - autoriser un accès audit service lorsque ladite seconde donnée candidate reçue correspond à ladite donnée d'authentification protégée par ladite clé d'encryptage identifiée par ledit identifiant complémentaire de sécurité mémorisé correspondant.

Selon un mode de réalisation particulier, ledit procédé d'autorisation comprend en outre, lorsque ladite seconde donnée candidate reçue correspond à ladite donnée d'authentification protégée par ladite clé d'encryptage identifiée par ledit identifiant complémentaire de sécurité mémorisé correspondant, des étapes consistant à :
- transmettre une nouvelle clé d'encryptage ;
- transmettre et mémoriser un identifiant complémentaire de sécurité identifiant la nouvelle clé d'encryptage transmise.

Selon un autre aspect, la présente divulgation concerne un serveur appartenant à un réseau de communication bidirectionnel et comprenant un processeur configuré pour :
- recevoir une requête d'accès à un service disponible sur ledit serveur, ladite requête comprenant au moins:
   - une adresse désignant ledit service sur ledit serveur;
   - un identifiant d'accès audit service, comprenant au moins un identifiant relatif à un produit auquel appartient ladite radio-étiquette ;
- comparer ledit identifiant avec au moins identifiant déterminé autorisant un accès audit service.

Selon un mode de réalisation particulier, ledit processeur est en outre configuré pour :
- obtenir une association dudit identifiant déterminé avec au moins une donnée d'authentification et une clé d'encryptage de ladite donnée d'authentification, ladite donnée d'authentification et ladite clé d'encryptage ayant un format adapté à un stockage de ladite donnée d'authentification dans une zone mémoire, sécurisée par ladite clé d'encryptage, d'une radio-étiquette,
- recevoir une donnée candidate ;
- autoriser un accès audit service lorsque ladite donnée candidate reçue correspond à ladite donnée d'authentification associée au identifiant déterminé.

Bien que non explicitement décrit, ledit service peut être configuré pour mettre en oeuvre le procédé d'autorisation de la présente divulgation dans l'un quelconque de ses modes de réalisation.

Selon un autre aspect, la présente divulgation concerne une radio-étiquette comprenant une interface de communication radio fréquence.

Selon un mode de réalisation particulier, ladite radio-étiquette est configurée pour une mémorisation d'au moins une information d'accès à un service offert par un serveur distant, ladite information comprenant au moins :
- une adresse dudit service sur ledit serveur distant ;
- un identifiant d'accès audit service comprenant au moins un identifiant relatif à un produit auquel appartient ladite radio-étiquette.

Selon une caractéristique particulière, ledit identifiant d'accès de la radio-étiquette comprend en outre au moins un identifiant de connexion d'un utilisateur d'un produit auquel appartient ladite radio-étiquette.

Bien que non explicitement décrit, ladite radio-étiquette peut être configurée pour coopérer avec un terminal mettant en oeuvre le procédé d'authentification de la présente divulgation dans l'un quelconque de ses modes de réalisation.

Selon un autre aspect, la présente divulgation concerne un produit comprenant une radio-étiquette selon la présente divulgation, dans l'un quelconque des modes de réalisation précités.

Bien que non explicitement décrits, les modes de réalisations présentés peuvent être mis en oeuvre selon n'importe quelle combinaison ou sous-combinaison. Par exemple, un mode de réalisation du procédé d'authentification dans lequel une application est téléchargée sur le terminal peut être combiné avec un mode de réalisation dans lequel le procédé d'authentification comprend une réception, par ladite seconde interface, de ladite clé d'encryptage à affecter à la sécurisation de ladite zone mémoire de ladite radio-étiquette et/ou d'une adresse de ladite zone mémoire sécurisée.

D'autres modes de réalisation, facilement envisageables par un homme du métier à la lecture de la présente description, sont également inclus dans le périmètre de l'invention.

En particulier, la présente divulgation ne se limite pas à une authentification, ou une autorisation d'accès, à un service géré par un fournisseur du dispositif sur ou dans lequel est positionnée ladite radio-étiquette électronique mais peut également concerner un service géré par un tiers et mis à disposition des utilisateurs du dispositif, notamment temporairement.

Selon encore un autre aspect, l'invention concerne un produit programme d'ordinateur comprenant des instructions de code de programme pour exécuter le procédé d'authentification ci-dessus, dans l'un quelconque des modes de réalisation précités, lorsque ledit programme est exécuté par un ordinateur.

Selon encore un autre aspect, l'invention concerne un produit programme d'ordinateur comprenant des instructions de code de programme pour exécuter le procédé d'autorisation d'accès ci-dessus, dans l'un quelconque des modes de réalisation précités, lorsque ledit programme est exécuté par un ordinateur.

Selon encore un autre aspect, la présente divulgation concerne un support de stockage lisible par un ordinateur sur lequel est enregistré un programme d'ordinateur comprenant des instructions de code de programme pour exécuter le procédé d'authentification de la présente divulgation ou pour exécuter le procédé d'autorisation d'accès de la présente divulgation, dans l'un quelconque des modes de réalisation précités de l'un de ces procédés, lorsque ledit programme est exécuté par un ordinateur.

Un tel support de stockage lisible par un ordinateur peut prendre la forme d'un produit programme d'ordinateur chargé sur au moins un support de stockage lisible par un ordinateur comprenant des instructions de code de programme lisibles par un ordinateur et exécutables par un ordinateur.

Ainsi, dans la présente demande, un support de stockage lisible par un ordinateur est considéré comme étant un support de stockage non transitoire ayant la capacité intrinsèque de stocker des informations ainsi que la capacité intrinsèque de permettre une restitution des informations qu'il stocke.

Un support de stockage lisible par un ordinateur peut être par exemple, mais pas seulement, un système, un appareil ou un équipement électronique, magnétique, optique, électromagnétique, infra-rouge, à semi-conducteurs, ou mettant en oeuvre une combinaison des techniques précédemment citées. Il est à souligner que les éléments suivants, qui fournissent des exemples plus spécifiques de supports de stockage lisibles par un ordinateur auxquels les principes de l'invention peuvent s'appliquer, sont essentiellement cités à but illustratif et ne constituent en aucun cas une liste exhaustive, comme il sera facilement interprété par un homme du métier : une disquette portable pour ordinateur, un disque hardware, une mémoire de type ROM (pour Read Only Memory selon la terminologie anglaise), une mémoire effaçable de type EPROM (pour Erasable Programmable Read Only Memory selon la terminologie anglaise) ou mémoire flash, un disque portable compact comportant une mémoire ROM (ou CD_ROM selon la terminologies anglaise), un équipement optique de stockage, un équipement magnétique de stockage, ou toute combinaison adaptée des précédents éléments.

Comme il serait facilement compréhensible pour un homme du métier, selon des variantes, les aspects de la présente invention peuvent être mis en oeuvre par un équipement, par une méthode ou un support de stockage lisible par ordinateur. Aussi, des aspects de la présente invention peuvent être implémentés dans certains modes de réalisation sous la forme de composants entièrement matériels (par exemple un composant électronique ou une carte électronique munie de composants), ou sous forme de composants entièrement logiciels (incluant par exemple des composants firmwares, un logiciel dit « résident », du microcode, etc...). D'autres modes de réalisation peuvent mettre en oeuvre à la fois des composants matériels et des composants logiciels. De plus, ces composants matériels ou logiciels peuvent être implémentés dans un même équipement physique.

On désignera de façon générale dans le présent document par le terme « module » un composant pouvant aussi bien correspondre à un composant matériel ou à un composant logiciel. De plus, des aspects de la présente invention peuvent être implémentés sous forme d'un support de stockage lisible par ordinateur. Toute combinaison d'un ou plusieurs supports de stockage lisibles par ordinateur peut être utilisée.

### 4. Liste des figures.

L'invention sera mieux comprise, et d'autres particularités et avantages apparaîtront à la lecture de la description détaillée qui va suivre, relative à un mode de réalisation particulier, la description faisant référence aux dessins annexés parmi lesquels :
- la figure 1 illustre le principe général de l'invention ;
- la figure 2 est un diagramme fonctionnel illustrant un mode de réalisation du procédé d'authentification objet de la présente divulgation ;
- la figure 3 représente un mode de réalisation du dispositif terminal mobile de la figure 1 ;
- la figure 4 représente un mode de réalisation du composant radio-étiquette de la figure 1 ;
- la figure 5 représente un mode de réalisation du serveur de la figure 1 ;
- la figure 6 est un diagramme fonctionnel illustrant un mode de réalisation du procédé d'autorisation d'accès objet de la présente divulgation ;
- la figure 7 représente un mode de réalisation du produit comportant une radio-étiquette de la figure 1.

### 5. Description de modes de réalisation de l'invention

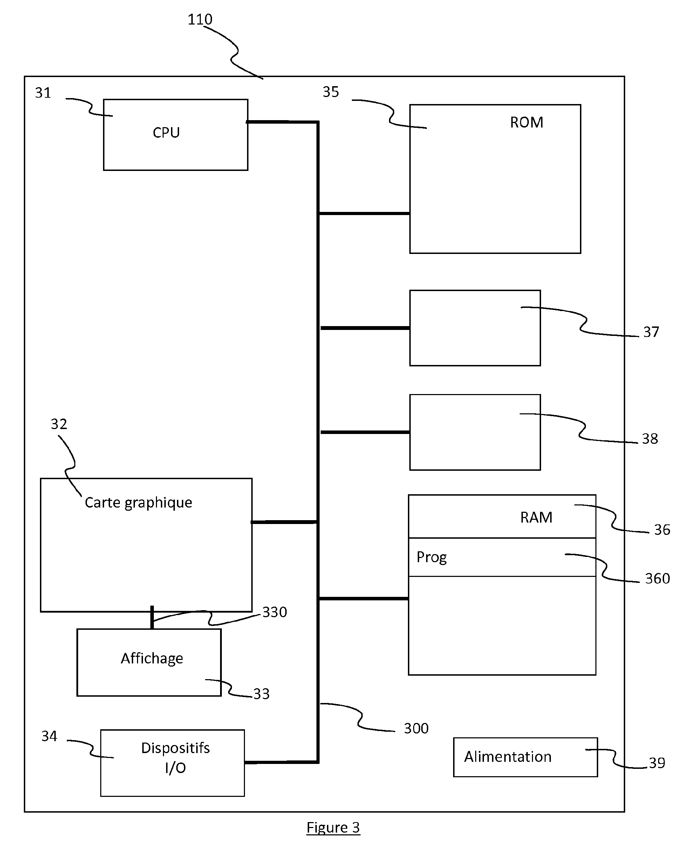

Sur les figures 3 à 5 et 7, les modules représentés sont des unités fonctionnelles, qui correspondent ou non à des unités physiquement distinguables. Par exemple, ces modules ou certains d'entre eux sont regroupés dans un unique composant, ou constitués des fonctionnalités d'un même logiciel. A contrario, selon d'autres modes de réalisation, certains modules sont composés d'entités physiques séparées.

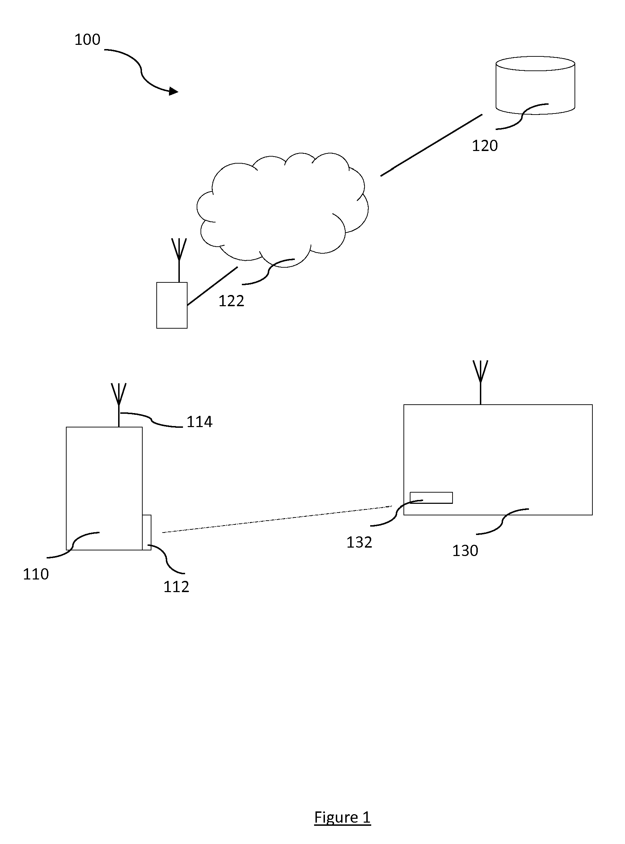

On présente, en liaison avec la figure 1, le principe général de la présente divulgation, selon un mode de réalisation particulier.

La figure 1 illustre un système de communication 100, comprenant un produit 130, muni d'une radio-étiquette 132, un terminal mobile 110 et un serveur 120.

Le produit 130 (c'est-à-dire ici de façon large tout objet matériel) peut être très différent selon les modes de réalisation. Par exemple, il peut s'agir d'un dispositif électronique, d'un équipement électroménager ou d'un bien de consommation, par exemple un véhicule, un jouet, ou un outil. Dans une variante, l'étiquette électronique peut être intégrée à un produit, par exemple un produit alimentaire ou d'entretien, ou positionnée sur le produit ou son emballage.

Selon le mode de réalisation particulier illustré, le produit 130 est un dispositif récepteur décodeur mis à la disposition d'au moins un utilisateur par un opérateur, le plus souvent à titre onéreux.

Le terminal mobile 110 est apte à être couplé avec une radio-étiquette (ou étiquette électronique), notamment la radio-étiquette 132 du dispositif récepteur-décodeur 130. Il est également apte à communiquer, par le biais d'une connexion sans-fil 114 à un réseau bidirectionnel 122, par exemple un réseau longue distance (ou WAN pour « Wide Area Network » selon la terminologie anglaise), avec le serveur 120 offrant un service aux utilisateurs du dispositif récepteur-décodeur 130.

Le service peut par exemple être un service complémentaire, en lien avec un service principal fourni par un opérateur par le biais du dispositif récepteur décodeur 130 (vidéo à la demande, diffusions télévisuelles payantes, ...). Dans d'autres modes de réalisation, le service peut être un complément au produit lui-même (par exemple un manuel utilisateur fourni par un fournisseur ou un fabricant du produit, un service après-vente...) ou à son fabricant (par exemple un site mettant en avant d'autres produits du fabricant et/ou permettant d'accéder à des jeux, des offres promotionnelles, des coupons de réduction. Selon les modes de réalisation, il peut s'agir d'un accès temporaire ou non, de durée limitée ou non... Par exemple, il peut s'agir dans un mode de réalisation particulier d'un service de VOD accessible pendant une journée dans le cadre d'une offre promotionnelle sur un produit.

Selon le mode de réalisation illustré, le service offert par le serveur 120 correspond à un site web à accès limité pour lequel au moins un identifiant de connexion est exigé.

Dans le mode de réalisation particulier présenté, la radio-étiquette 132 dont est muni le dispositif récepteur décodeur 130 contient les informations (cryptées ou non cryptées) nécessaires à un accès au service disponible sur le serveur 120 via un autre terminal, différent du dispositif récepteur décodeur 130, et notamment via le terminal mobile 110. Le terminal mobile 110 (par exemple une tablette ou un smartphone) comprend une interface 114 de communication sans-fil par radiofréquence, bidirectionnelle, en champ proche, par exemple une interface de type NFC (pour « Near Field Communication » selon la terminologie anglaise). Cette interface permet le couplage avec d'autres équipements compatibles avec le standard NFC, notamment avec la radio-étiquette 132 et l'échange de données avec des équipements sur des distances relativement courtes, allant par exemple du contact direct à quelques centimètres, voire quelques dizaines de centimètres. L'interface NFC, adaptée pour la lecture de la radio-étiquette radiofréquence 132 (encore appelée « tag RFID ») peut par exemple comprendre un lecteur NFC (ou « NFC reader » selon la terminologie anglaise). Elle permet d'accéder en lecture à des informations présentes sur la radio-étiquette 132 sous contrôle d'une application spécifique exécutée par le terminal mobile 110.

La méthode de couplage entre le terminal mobile 110 et la radio-étiquette 132, dite « par communication en champs proches », ou mode NFC, utilise le couplage électromagnétique entre deux antennes boucles pour communiquer. Selon les modes de réalisation, la radio-étiquette NFC peut être passive, semi-active, ou active.

La grande proximité nécessaire à l'établissement des communications en champs proches, par exemple selon le standard NFC, garantit un niveau de sécurité élevé et permet en outre, dans le cadre de la présente divulgation, de limiter l'autorisation d'accès au service aux seuls terminaux présents à proximité du dispositif récepteur-décodeur, puisque seuls eux ont la possibilité d'établir une communication avec la radio-étiquette et donc d'accéder aux données contenues dans la radio-étiquette, limitant de fait les risques de fraude.

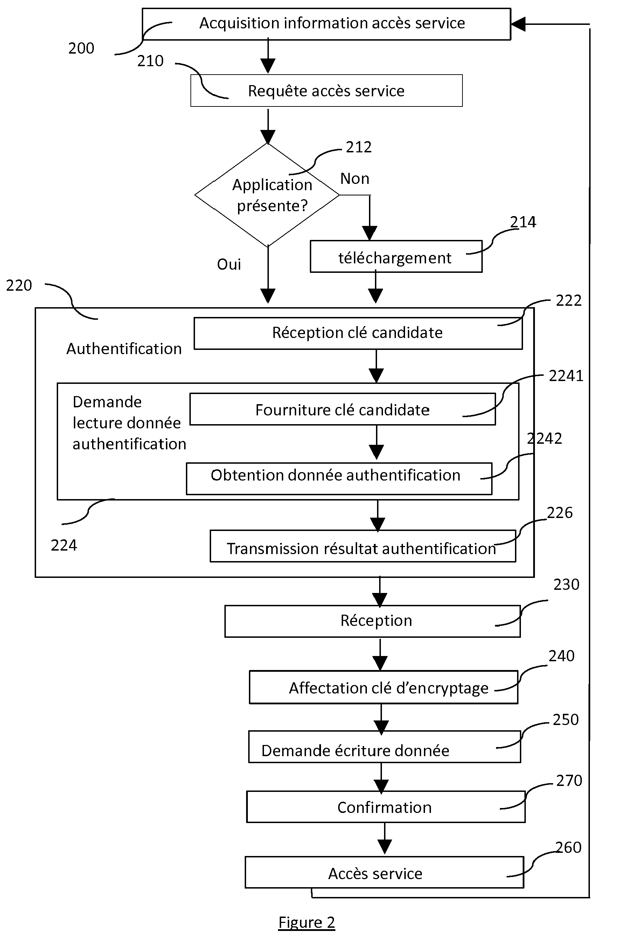

On présente à présent en liaison avec la figure 2, de façon plus détaillée, un mode de réalisation particulier du procédé d'authentification objet de la présente divulgation, mis en oeuvre par exemple sur le terminal mobile 110 illustré dans les figures 1 et 3.

Dans le mode de réalisation illustré, le procédé d'authentification comprend tout d'abord une acquisition 200 , par le biais du dispositif récepteur décodeur 130, d'une information relative à un accès à un site internet d'un opérateur offrant des services. Cette information peut notamment comprendre l'adresse du site internet, par exemple une URL du site internet, ainsi qu'un identifiant d'accès, nécessaire pour une connexion au site internet. Elle peut également comprendre un identifiant de la radio-étiquette elle-même. Dans le cas particulier illustré, l'identifiant d'accès est un identifiant relatif au dispositif récepteur décodeur lui-même (par exemple un numéro de série du fabricant du dispositif 130, une référence interne à l'opérateur, un identifiant du dispositif sur un réseau utilisé par l'opérateur pour communiquer avec le dispositif). Dans un autre mode de réalisation particulier, l'identifiant d'accès peut comprendre un identifiant de connexion d'un utilisateur du dispositif 130.

Cet identifiant peut en particulier ne pas être affiché en clair sur le dispositif, ni communiqué aux utilisateurs du dispositif, et être réservé à l'authentification par radio-étiquette du dispositif, dans le cadre d'un accès au service par exemple.

Dans le mode de réalisation illustré, le terminal et la radio-étiquette sont compatibles avec une technologie de communication en champ proche par radiofréquence, par exemple une technologie de communication en champ proche de type NFC (pour Near Field Communication selon la terminologie anglaise).

Selon les modes de réalisation, l'acquisition de l'information peut par exemple être effectuée de façon automatique, ou de façon optionnelle, notamment après activation du lecteur NFC du terminal 110, lorsque le terminal 110 est placé à proche distance, par exemple à 3 centimètres, du dispositif 130. Dans encore d'autres modes de réalisation, l'acquisition peut être mis en oeuvre seulement après réception d'une autorisation d'un utilisateur du terminal 110 par exemple.

Dans le mode de réalisation de la figure 2, l'acquisition 200 est suivie d'une requête 210 d'accès au site internet. La requête 210 peut notamment comprendre le lancement d'une application de navigation (ou browser selon la terminologie anglaise) présente sur le terminal 110 et/ou une tentative de chargement, par une application de navigation du terminal 110, de la page web désignée par l'URL, avec en paramètre l'identifiant d'accès acquis.

Dans certains modes de réalisation, notamment lorsque l'information acquise est compatible avec un standard de formatage d'information, comme le standard NDEF (pour « NFC Data Exchange Format »), la requête peut être effectuée de façon automatique par le terminal.

Le serveur WEB peut alors vérifier les droits d'accès associés à l'identifiant d'accès (par exemple l'identifiant du dispositif 130) inclus dans la requête et autoriser un accès 260 au service le cas échéant. En particulier, le procédé peut comprendre, préalablement ou lors de l'accès au service, la réception d'un identifiant d'une session ouverte sur le serveur.

Dans certains modes de réalisation, la requête 210 peut comprendre en outre une donnée identifiant le terminal émetteur de la requête.

Dans le mode de réalisation particulier présenté, l'accès à la page Web provoque une vérification 212 de la présence sur le terminal 110 d'une application d'authentification du service et le téléchargement 214 de l'application si elle n'est pas déjà présente. Cette application peut en particulier mettre en oeuvre une authentification 220 de l'accès au service. Cette authentification 220 peut notamment être basée sur des données présentes dans la radio-étiquette, notamment sur des données situées dans des zones mémoire, sécurisées par des clés d'encryptage, de la radio-étiquette. Ainsi, selon la figure 2, l'authentification 220 comprend notamment une réception 222, par exemple sous un format sécurisé comme https, d'une clé candidate du serveur sur lequel le service est disponible. Selon les modes de réalisation, cette clé candidate peut être demandée au serveur web par l'application d'authentification ou fournie à l'initiative du serveur lui-même. En particulier, la clé d'encryptage peut être transmise entre le serveur et l'application téléchargée sans mise en oeuvre de mécanisme de chiffrement.

La réception 222 de la clé candidate peut en outre comprendre une désignation (par exemple une adresse) d'une zone mémoire de la radio-étiquette sécurisée par la clé candidate. Dans le mode de réalisation illustré, la réception 222 de la clé candidate est suivie par une demande de lecture 224 d'au moins une donnée d'authentification sur la radio-étiquette. Cette demande de lecture 224 comprend notamment une fourniture 2241 de la clé candidate reçue du serveur puis, si la clé candidate reçue permet l'accès en lecture à la donnée d'authentification sur la radio-étiquette, l'obtention 2242 de la donnée d'authentification.

Dans d'autres modes de réalisation, l'authentification peut ne pas comprendre de réception d'une clé candidate. En effet, la clé candidate peut être mémorisée par l'application d'authentification. Par exemple, il peut s'agir d'une valeur statique connue de l'application, ou encore d'une valeur dynamique déjà fournie à l'application (par exemple lors d'un paramétrage dynamique de l'application ou encore lors d'une précédente authentification effectuée depuis le terminal 110.

Dans le mode de réalisation illustré, l'authentification comprend en outre une transmission 226 du résultat de l'authentification, et notamment la donnée d'authentification obtenue.

Lorsque la clé candidate n'a pas permis d'obtenir un donnée d'authentification, la transmission 226 peut comprendre une indication représentative de l'échec. Dans d'autres modes de réalisation, il peut n'être effectué aucune transmission vers le serveur en cas d'échec de la demande de lecture.

Dans certains modes de réalisation, le procédé permet une définition et/ou une modification de la clé d'encryptage et/ou la donnée d'authentification présente sur la radio-étiquette. Ainsi, dans le mode de réalisation illustré en figure 2, le procédé comprend une réception 230, par exemple sous un format sécurisé comme https, d'une clé d'encryptage et/ou d'une donnée d'authentification à enregistrer sur la radio-étiquette. La réception 230 peut en outre comprendre une désignation (par exemple une adresse) d'une zone mémoire de la radio-étiquette à sécuriser par la clé d'encryptage ou à laquelle enregistrer la donnée d'authentification reçue du serveur.

Dans le mode de réalisation particulier de la figure 2, le procédé comprend en outre une affectation 240 de la clé d'encryptage reçue à une zone mémoire particulière du la radio-étiquette, par les moyens radiofréquence du terminal et/ou une demande d'écriture 250 de la donnée d'authentification reçue du serveur dans une zone mémoire particulière de la radio-étiquette.

Dans certains modes de réalisation, en cas d'échec, la demande d'écriture 250 peut être réitérée, une ou plusieurs fois.

Dans certains modes de réalisation, la demande d'écriture 250 d'une donnée d'authentification peut notamment comprendre une fourniture d'au moins une clé d'encryptage destinée à sécuriser la zone mémoire où sera écrite la donnée d'authentification.

Il peut s'agir par exemple d'une clé d'encryptage reçue lors de la réception 230 de la donnée d'authentification ou d'une clé reçue précédemment, notamment d'une clé d'encryptage ayant déjà permis d'obtenir une donnée d'authentification contenue dans la radio-étiquette.

Dans certains modes de réalisation, où la clé d'encryptage peut être modifiée, la réception d'une clé d'encryptage peut comprendre une réception et une mémorisation d'un identifiant complémentaire de sécurité, par exemple un identifiant permettant d'identifier la clé d'encryptage reçue pour l'émetteur de la clé d'encryptage reçue (par exemple pour le serveur 120).

L'identifiant complémentaire de sécurité peut être mémorisée sur le terminal 110 ou écrit dans une zone mémoire de la radio-étiquette 132, notamment dans une zone mémoire non sécurisée de la radio-étiquette.

Dans de tels mode de réalisation, l'identifiant complémentaire de sécurité mémorisé peut être ensuite fourni au serveur lors de la requête d'accès au service 210 ou en même temps que la donnée d'authentification 226 (notamment lors la clé d'encryptage utilisée pour obtenir la donnée d'authentification était mémorisée par l'application et non reçue du serveur 120) ou sur requête du serveur 120.

Dans un mode de réalisation où l'identifiant complémentaire de sécurité reçu est mémorisé sur la radio-étiquette, le procédé comprend alors une lecture de la radio-étiquette pour obtenir l'identifiant complémentaire de sécurité à fournir au serveur 120.

Selon les modes de réalisation, la clé d'encryptage et/ou la donnée d'authentification peut être demandée au serveur web par l'application d'authentification ou fournie à l'initiative du serveur lui-même. Ainsi, selon les modes de réalisation, l'affectation 240 d'une clé d'encryptage et/ou la demande d'écriture 250 peuvent être effectuées périodiquement, lors de chaque démarrage du terminal, après chaque authentification (comme illustré en figure 2), après chaque réception d'une clé candidate, après chaque accès au service, après un nombre d'accès déterminé au service depuis ledit terminal, après une déconnexion du service, ou à la demande du serveur.

Dans certains modes de réalisation, le procédé peut comprendre en outre une émission d'une confirmation 270 au serveur 120 de l'écriture, dans la radio-étiquette, de la nouvelle donnée d'authentification et/ou la clé d'encryptage. Dans une variante, le terminal peut générer une alerte en cas d'échec de la demande d'écriture 250. Cette confirmation et/ou cette alerte est optionnelle.

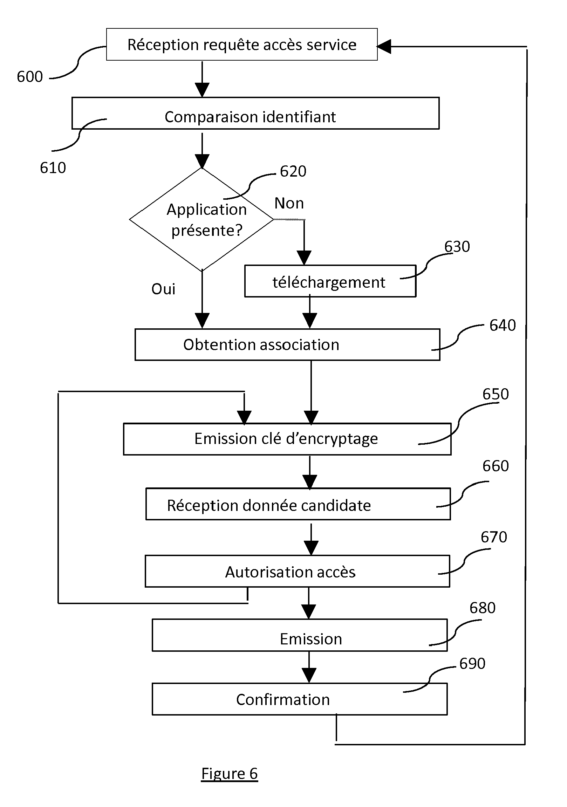

On présente à présent en liaison avec la figure 6, de façon plus détaillée, un mode de réalisation particulier du procédé d'autorisation d'accès objet de la présente divulgation, mis en oeuvre par exemple sur le serveur 120 illustré en figure 1.

Dans le mode de réalisation illustré, le procédé d'autorisation d'accès comprend tout d'abord une réception 600 d'une information relative à un accès au site internet introduit en liaison avec la figure 2 et hébergé par le serveur 120. Cette information peut notamment comprendre l'adresse du site internet, par exemple son URL, ainsi qu'un identifiant d'accès, nécessaire pour une connexion au site internet. Dans le cas particulier illustré, l'identifiant d'accès comprend un identifiant relatif au dispositif récepteur décodeur 130 (Comme exposé en liaison avec la figure 2).

Dans le mode de réalisation de la figure 6, la réception 600 de la requête d'accès est suivie d'une comparaison 610 de l'identifiant d'accès reçu avec au moins un identifiant déterminé, par exemple un identifiant d'un dispositif récepteur décodeur mémorisé comme représentatif d'une autorisation d'accès au service.

Une autre comparaison, optionnelle, peut en outre être effectuée entre un identifiant du terminal émetteur de la requête et au moins un identifiant d'un terminal mémorisé comme pouvant être autorisé à accéder au service, par exemple un identifiant de terminal mémorisé en liaison avec l'identifiant du dispositif récepteur-décodeur.

Encore une autre comparaison, également optionnelle, peut en outre être effectuée entre un identifiant, inclus dans la requête, représentatif d'une localisation du terminal émetteur de la requête et un identifiant de référence, représentatif de la localisation du dispositif récepteur-décodeur. Par exemple, il peut s'agir d'une comparaison entre des adresses IP. Ainsi, si le terminal utilise une communication de type Wifi avec le serveur, l'adresse IP de la passerelle qu'il utilise pour accéder au réseau 120 peut être comparée avec l'adresse IP d'une passerelle utilisée par le dispositif récepteur-décodeur ou par le terminal de l'utilisateur du dispositif quand il accède au service. Si le terminal utilise une communication de type 3G avec le serveur, son adresse IP courante peut être comparée à une adresse IP précédemment fournie par le terminal, de façon à détecter un changement de la localisation du terminal.

Un tel mode de réalisation peut ainsi permettre par exemple de n'autoriser l'accès au service que lorsque le terminal 110 est proche, géographiquement, du dispositif 130. De cette façon, un utilisateur d'un terminal 110, «invité» de l'utilisateur du dispositif 130, peut par exemple bénéficier temporairement du service lorsqu'il se trouve au domicile de l'utilisateur du dispositif. De plus, certains modes de réalisation dans lesquels la communication de l'identifiant d'accès est effectuée sans saisie manuelle de l'utilisateur du dispositif peuvent permettre d'éviter de fournir explicitement des identifiants d'accès à des tiers.

Dans certains modes de réalisation, lorsque l'identifiant d'accès reçu correspond à au moins un identifiant d'un dispositif décepteur décodeur mémorisé comme représentatif d'une autorisation d'accès au service, le procédé comprend l'émission d'une autorisation 670 d'accès au service. Optionnellement, le procédé peut comprendre, préalablement ou lors de l'autorisation d'accès au service, la fourniture d'un identifiant d'une session ouverte sur le serveur.

Un tel identifiant de session peut par exemple permettre par la suite au terminal 110 d'accéder au site, sans demander une nouvelle autorisation d'accès, pendant un temps limité, ou pendant un nombre de connexions limité.

Selon la figure 6, avant une autorisation d'accès 670, le procédé comprend des vérifications complémentaires mettant en oeuvre une application d'authentification. Ainsi, lorsque l'identifiant d'accès reçu correspond à au moins un identifiant d'un dispositif décepteur décodeur mémorisé comme représentatif d'une autorisation d'accès au service, le procédé comprend un test 620 de la présence d'une application d'authentification sur le terminal 110 à l'origine de la requête et un lancement du téléchargement 630 d'une application d'authentification sur le terminal 110 le cas échéant.

Dans certains modes de réalisation, la procédé peut comprendre une mémorisation de l'identifiant du terminal émetteur de la requête (par exemple son adresse IP), de façon à toujours autoriser par la suite un accès au site depuis ce terminal, ou à l'autoriser pendant une durée déterminée ou lorsque certaines conditions sont remplies.

Selon les modes de réalisation, le test 620 et le téléchargement 630 éventuel peuvent être effectués avant, pendant ou après la comparaison 610.

Dans le mode de réalisation illustré, le procédé d'autorisation comprend également une obtention 640 d'une association entre l'identifiant déterminé et au moins une donnée d'authentification et une clé d'encryptage relative à cette donnée d'authentification, puis une émission 650 de cette clé d'encryptage vers l'application d'authentification du terminal 110 émetteur de la requête. La donnée d'authentification et la clé d'encryptage associées à un identifiant d'accès peuvent par exemple être mémorisées dans le serveur, ou obtenu auprès d'un dispositif tiers, par exemple, sur un espace de stockage (comme une base de données) situé sur, ou accessible via, un équipement tiers (par exemple un serveur dédié au stockage d'informations relatives à des abonnés).

Après réception 660 d'une donnée candidate, depuis l'application d'authentification téléchargée sur le terminal 110 par exemple, la donnée candidate est comparée à la donnée d'authentification associée à l'identifiant d'accès reçu. Une autorisation d'accès 670 est alors générée lorsque les deux données correspondent (il peut s'agir selon les modes de réalisation d'une égalité des deux données ou d'une égalité d'une partie des deux données).

L'étape d'émission 650 d'une clé d'encryptage associée à l'identifiant déterminé peut être optionnelle.

Ainsi, selon les modes de réalisation, la clé d'encryptage peut être émise à l'initiative du serveur, de façon systématique ou périodique, ou en réponse à une sollicitation de l'application d'authentification. L'émission de la clé candidate peut en outre comprendre une désignation (par exemple une adresse) d'une zone mémoire d'une radio-étiquette sécurisée par la clé candidate. Dans d'autres modes de réalisation, où une zone mémoire unique de la radio-étiquette est protégée par une clé d'accès, cette désignation est optionnelle. Dans certains modes de réalisation, en cas d'absence de réception de donnée d'authentification, la clé d'encryptage peut être réémise, une ou plusieurs fois, par le serveur.

Dans certains modes de réalisation, en cas d'absence de réception d'une donnée d'authentification par exemple ou lors de la réception d'une donnée candidate erronée, ou d'une donnée représentative d'un échec du terminal (par exemple un « NAK » ou « NACK » pour « Negative Acknowledgement » selon la terminologie anglaise), traduisant un risque de piratage, une alerte peut être générée vers un tiers de supervision.

Dans certains modes de réalisation, le procédé d'autorisation peut comprendre une définition et/ou une modification de la clé d'encryptage et/ou de la donnée d'authentification présente sur une radio-étiquette du dispositif récepteur décodeur 130. Selon les modes de réalisation, la nouvelle donnée d'authentification et/ou la clé d'encryptage et/ou l'adresse de la zone mémoire de la radio-étiquette à laquelle elle doit être écrite peuvent être générées par le serveur ou obtenues auprès d'un équipement tiers, par exemple un serveur de gestion d'abonnés.

Le procédé d'autorisation peut comprendre une émission 680 sous un format sécurisé comme https, d'une clé d'encryptage, d'une donnée d'authentification à enregistrer sur la radio-étiquette et/ou d'une désignation (par exemple une adresse) d'une zone mémoire de la radio-étiquette à sécuriser par la clé d'encryptage ou à laquelle enregistrer la donnée d'authentification émise, de façon notamment à synchroniser le serveur et la radio-étiquette .

Dans certains modes de réalisation, la clé d'encryptage est modifiée en même temps que la donnée d'authentification qu'elle protège. Dans de tels modes de réalisation, la nouvelle donnée d'authentification et/ou sa clé d'encryptage et/ou l'adresse de la zone mémoire de la radio-étiquette peuvent être émises en même temps vers le terminal 110, ou au contraire, pour diminuer les risques d'interception, être émises de façon séparée vers le terminal 110 (éventuellement dans des messages non consécutifs). Dans d'autres modes de réalisation, les modifications d'une donnée d'authentification et de sa clé d'encryptage peuvent être dé-corrélées. Par exemple, la donnée d'authentification peut être modifiée de façon plus ou moins fréquente que la clé d'encryptage.

Dans certains modes de réalisation, le procédé comprend en outre une réception d'une confirmation 690 du terminal 110 de l'écriture, dans la radio-étiquette, de la nouvelle donnée d'authentification et/ou la clé d'encryptage. Dans d'autres modes de réalisation, éventuellement complémentaires, le serveur peut recevoir une alerte du terminal 110 en cas d'échec d'une demande d'écriture dans la radio-étiquette. Dans de tels modes de réalisation, en cas d'absence de réception de la confirmation ou de réception d'une alerte, le serveur peut par exemple conserver la précédente donnée d'authentification et/ou la précédente clé d'encryptage, ou réitérer la modification

Dans certains modes de réalisation, notamment lorsque la clé d'encryptage est modifiable, l'émission 650 d'une clé d'encryptage peut comprendre une émission et une mémorisation, par le serveur, d'un identifiant complémentaire de sécurité identifiant la clé d'encryptage émise. Selon les modes de réalisation, il peut s'agir d'une identification relative au serveur ou d'une identification relative à un équipement tiers ayant généré la clé d'encryptage à émettre, par exemple un serveur de gestion d'abonnés.

Dans de tels modes de réalisation, le procédé peut comprendre une réception d'une donnée complémentaire, par exemple lors de chaque réception 600 d'une requête d'accès et/ou de chaque réception 660 d'une donnée candidate. La réception peut également faire suite à une requête du serveur notamment en absence de réception d'une donnée candidate ou en cas de réception d'une donnée candidate erronée. Lorsque la donnée complémentaire reçue est un identifiant complémentaire de sécurité mémorisé par le serveur (ou un équipement tiers générant les clé d'encryptage), le procédé peut comprendre en outre une réitération des étapes 650, 660 et 670, avec une émission de la clé candidate identifiée par la donnée complémentaire, une réception d'une nouvelle donnée candidate, et une autorisation d'accès lorsque la nouvelle donnée candidate reçue correspond à la donnée d'authentification protégée par la clé d'encryptage identifiée par l'identifiant complémentaire de sécurité.

Cette réitération peut être effectuée de façon systématique ou optionnelle, notamment en absence de réception d'une donnée candidate et/ou en cas de réception d'une donnée candidate erronée et/ou lorsque la donnée complémentaire reçue est un identifiant complémentaire de sécurité mémorisé autre que celui identifiant la dernière clé d'encryptage émise par le serveur pour la radio-étiquette.

Dans de tels modes de réalisation, l'étape 680 d'émission d'une nouvelle clé d'encryptage peut notamment être effectuée systématiquement après une autorisation d'accès par une donnée d'authentification protégée par une clé d'encryptage autre que la dernière clé d'encryptage émise par le serveur pour la radio-étiquette.

Un mode de réalisation avec une double authentification systématique par une première et une seconde donnée d'authentification, peut par exemple permettre de mieux authentifier l'accès au service, lorsque la radio-étiquette peut contenir plusieurs données d'authentification encryptées par des clés différentes.

Un mode de réalisation avec une authentification par une première donnée, puis en cas d'échec, par une seconde donnée d'authentification, peut par exemple permettre au système se remettre d'une attaque par émulation d'une radio-étiquette, la non détection immédiate de l'alarme ayant provoqué la communication à la radio-étiquette émulée de la dernière clé d'encryptage, et l'absence de communication à la radio-étiquette véritable du système cette dernière clé d'encryptage.

On présente à présent en figure 3 de façon plus détaillée un terminal adapté à la mise en oeuvre du procédé d'authentification, dans au moins un de ses modes de réalisation.

La figure 3 illustre schématiquement un exemple de réalisation matérielle du terminal 110 de la figure 1 dans un mode de réalisation particulier.

Le terminal 110 correspond par exemple à un ordinateur portable (de l'anglais « laptop »), à une tablette ou à un téléphone intelligent (de l'anglais Smartphone). Il peut également s'agir d'un autre équipement électronique, notamment d'un équipement électronique portatif, comme une montre connectée par exemple.

Dans le mode de réalisation particulier illustré, le terminal 110 est un smartphone et comprend les modules suivants, reliés entre eux par un bus 300 d'adresses et de données qui transporte également un signal d'horloge :
- un microprocesseur 31 (ou CPU), adapté à la mise en oeuvre des fonctions usuelles que possède un smart phone, et d'exécution d'applications logicielles embarquées;
- une carte graphique 32 ;
- un ou plusieurs dispositifs I/O (de l'anglais « Input/Output » ou en français « Entrée/Sortie ») 34, tels que par exemple un écran tactile, une caméra, un microphone, un haut-parleur etc. ;
- une mémoire non volatile de type ROM (de l'anglais « Read Only Memory ») 35 ;
- une mémoire vive ou RAM (de l'anglais « Random Access Memory ») 36 ;
- au moins une interface de communication 37 configurée pour l'émission et/ou la réception de données à travers le réseau bidirectionnel WAN, par exemple via une connexion sans fil (notamment de type WIFI®, Bluetooth ou GSM) ;
- au moins une interface de communication 38 configurée pour l'émission et la réception de données par exemple radiofréquence (notamment un transpondeur de type NFC);
- une alimentation 39.

Dans certains modes de réalisation, le terminal 110 peut comprendre également ou être connecté à un dispositif d'affichage 33 de type écran d'affichage relié directement à la carte graphique 32 par un bus dédié 330.

Chacune des mémoires mentionnées peut comporter au moins un « registre », c'est-à-dire une zone de mémoire de faible capacité (quelques données binaires) ou une zone mémoire de grande capacité (permettant de stocker un programme entier ou tout ou partie des données représentatives de données calculées ou à afficher).

A la mise sous tension, le microprocesseur 31 charge et exécute les instructions du programme contenu dans un registre 360 de la RAM 36, et notamment les algorithmes mettant en oeuvre le procédé d'authentification de la présente divulgation décrit ci-dessus.

Selon une variante, le terminal 110 comprend plusieurs microprocesseurs.

Selon une autre variante, l'alimentation 39 est externe à au terminal 30.

Dans un mode de réalisation, compatible avec le mode de réalisation illustré en figure 3, le microprocesseur 31 peut être en particulier configuré pour :
- acquérir au moins une information contenue dans une radio étiquette et comprenant au moins:
   - une adresse d'un service disponible sur un réseau de communication bidirectionnel;
   - un identifiant d'accès au service, comprenant au moins un identifiant relatif à un produit auquel appartient la radio-étiquette ;
- requérir un accès au service, via l'adresse, en fournissant l'identifiant d'accès.

Plus particulièrement, dans le mode de réalisation particulier de la figure 3, l'interface 38 de communication par radio fréquence est compatible avec le standard de communication en champs proches NFC. Cette interface permet l'échange de données par radiofréquences avec un composant électronique comme une radio-étiquette (ou tag) NFC. En d'autres termes, l'interface de communication 38 est donc configurée et adaptée pour la lecture ou l'écriture de données présentes dans une radio-étiquette et plus particulièrement dans la radio-étiquette 132 représentée en figure 1. L'interface 37 de communication bidirectionnelle sans-fil du terminal mobile 110 permet en outre des échanges de données entre le terminal 110 et des équipements, notamment le serveur 120, appartenant à un réseau 122 bidirectionnel.

Selon le mode de réalisation de l'invention, le terminal mobile 110 et la radio-étiquette 132 sont couplés par l'intermédiaire de l'interface 37 pour procéder à la lecture ou à l'écriture de données comprises dans la radio-étiquette 132.

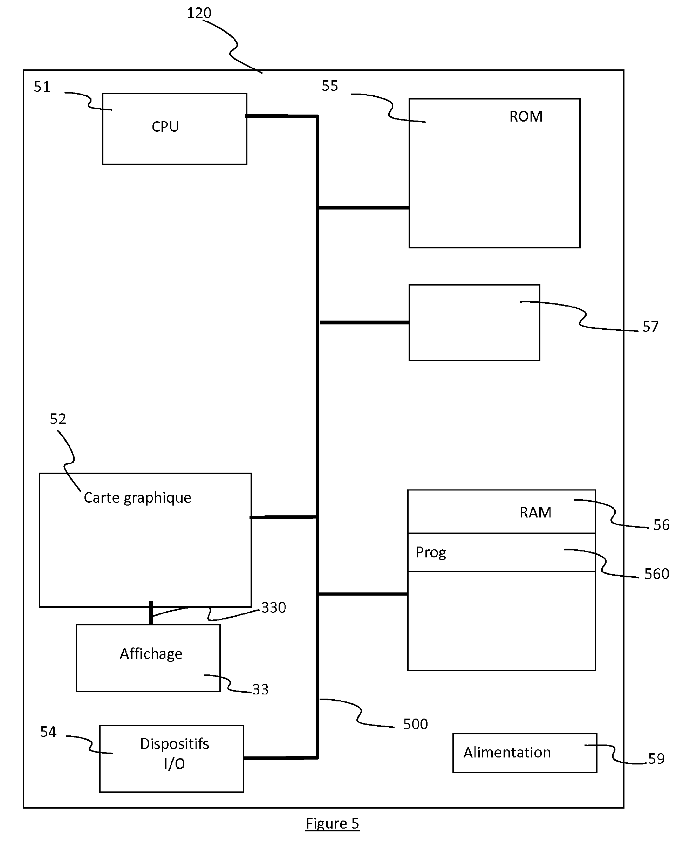

La figure 5 illustre schématiquement un exemple de réalisation matérielle d'un serveur 120, adapté pour la mise en oeuvre du procédé d'autorisation d'accès de la présente divulgation, dans l'un de ses modes de réalisation.

Dans le mode de réalisation particulier illustré, le serveur 120 comprend les modules suivants, reliés entre eux par un bus 500 d'adresses et de données qui transporte également un signal d'horloge :
- un microprocesseur 51 (ou CPU) ;
- une carte graphique 52 ;
- un ou plusieurs dispositifs I/O (de l'anglais « Input/Output » ou en français « Entrée/Sortie ») 54, tels que par exemple un clavier, une souris, une webcam, un microphone, un haut-parleur etc. ;
- une mémoire non volatile de type ROM (de l'anglais « Read Only Memory ») 55 ;
- une mémoire vive ou RAM (de l'anglais « Random Access Memory ») 56 ;
- au moins une interface de communication 57 configurée pour l'émission et/ou la réception de données à travers le réseau bidirectionnel WAN ;
- une alimentation 59.

Dans certains modes de réalisation, le serveur 120 peut comprendre également ou être connecté à un dispositif d'affichage 53 de type écran d'affichage relié directement à la carte graphique 52 par un bus dédié 530. Chacune des mémoires mentionnées peut comporter au moins un «registre », c'est-à-dire une zone de mémoire de faible capacité (quelques données binaires) ou une zone mémoire de grande capacité (permettant de stocker un programme entier ou tout ou partie des données représentatives de données calculées ou à afficher).

A la mise sous tension, le microprocesseur 51 charge et exécute les instructions du programme contenu dans un registre 560 de la RAM 56, et notamment les algorithmes mettant en oeuvre le procédé d'autorisation d'accès de la présente divulgation, dans l'un de ses modes de réalisation.

Selon une variante, le serveur 120 comprend plusieurs microprocesseurs.

Selon une autre variante, l'alimentation 59 est externe au serveur 120.

Dans un mode de réalisation, compatible avec le mode de réalisation illustré en figure 5, le microprocesseur 51 peut être en particulier configuré pour :
- recevoir une requête d'accès à un service disponible sur le serveur, la requête comprenant au moins:
   - une adresse désignant le service sur le serveur;
   - un identifiant d'accès au service, comprenant au moins un identifiant relatif à un produit auquel appartient la radio-étiquette ;
- comparer l'identifiant avec au moins identifiant déterminé autorisant un accès au service.

Dans le mode de réalisation particulier présenté, le microprocesseur 51 est en outre configuré pour :
- obtenir une association de l'identifiant déterminé avec au moins une donnée d'authentification et une clé d'encryptage de la donnée d'authentification, la donnée d'authentification et la clé d'encryptage ayant un format adapté à un stockage de la donnée d'authentification dans une zone mémoire, sécurisée par la clé d'encryptage, d'une radio-étiquette,
- recevoir une donnée candidate ;
- autoriser un accès au service lorsque la donnée candidate reçue correspond à la donnée d'authentification associée au identifiant déterminé.

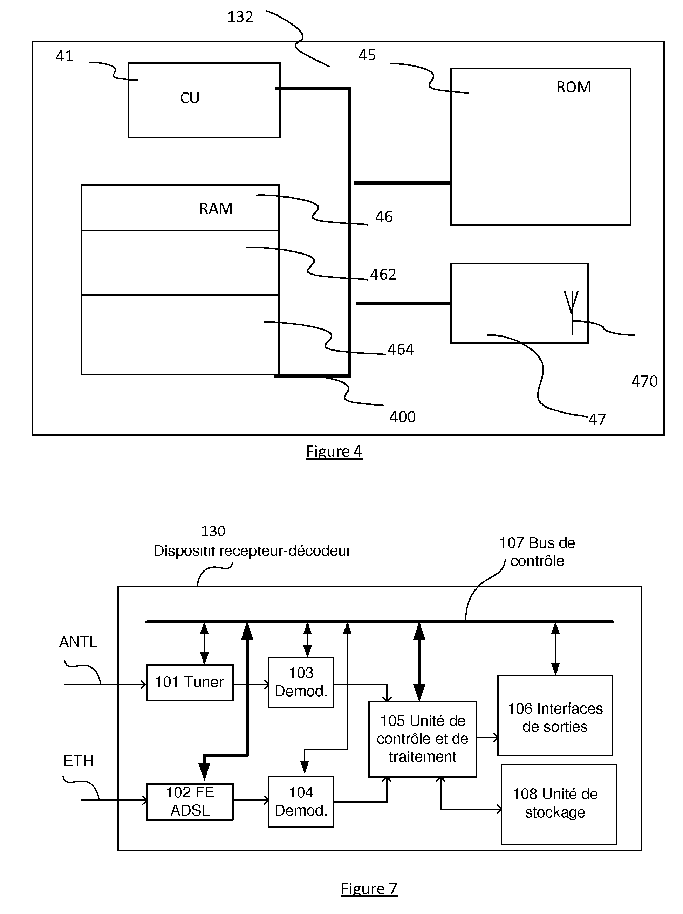

La figure 7 illustre des détails architecturaux d'un dispositif récepteur-décodeur 130 de contenus audiovisuels mettant en oeuvre selon un mode de réalisation particulier et non limitatif de l'invention, par exemple un dispositif récepteur-décodeur 130 de télévision numérique terrestre. Le dispositif récepteur-décodeur 130 peut être relié par une antenne de réception à un réseau de transmission de programmes audiovisuels diffusant des contenus audiovisuels. Le réseau de transmission est de type « broadcast » (de l'anglais et qui signifie « diffusion de point à multipoint »). Le récepteur-décodeur 130 reçoit par l'antenne ANTL des signaux selon un mode de transmission mettant par exemple en oeuvre des techniques propres à l'émission de contenus par la télévision numérique terrestre (TNT). Selon une variante du mode de réalisation le réseau de diffusion utilise des techniques propres à la télévision numérique par satellite ou encore la diffusion en multicast sur un réseau large bande de type ADSL (de l'anglais « Asymétrie Digital Subscriber Line » et qui signifie « ligne numérique et asymétrique d'abonné »). Le récepteur-décodeur 130 est configuré pour la réception, l'enregistrement, le décodage et la restitution de contenus transmis à travers le réseau de transmission.

Le dispositif récepteur-décodeur 130 comprend un tuner 101, une interface ADSL 102, associés à un module de démodulation 103, 104 dont les sorties sont reliées à une unité de contrôle et de traitement 105. L'unité de contrôle et de traitement est adaptée au traitement des données reçues depuis le réseau de transmission. Les données traitées en vue d'être décodées et restituées sous forme d'un contenu audiovisuel restitué peuvent être ensuite transmises au module d'interfaces de sorties 106 et/ou au module d'unité de stockage 108. L'ensemble des modules tuner 101, démodulateur 103, interfaces de sorties 106 et unité de stockage 108 sont reliés à l'unité de contrôle et de traitement 105, par exemple par le bus de contrôle 107.

L'unité de contrôle et de traitement 105 du dispositif récepteur-décodeur 130 comprend tous les modules classiquement connus utiles au décodage, à l'enregistrement et à la restitution de contenus audiovisuels transmis sur le réseau de transmission auquel le dispositif est raccordé. Ces modules, bien connus de l'homme de l'art, peuvent comprendre par exemple, un démultiplexeur de flux de données, une mémoire tampon de démultiplexage, un « buffer » de réception, un module de décodage vidéo, un module de décodage audio, un module de restitution, une unité de contrôle comprenant un microcontrôleur et ses circuits connexes, une mémoire non-volatile comprenant des instructions de programme exécutable et des données systèmes, une mémoire vive, des circuits d'horloge, des interfaces de communication et de configuration. Ces circuits ne sont pas détaillés ici, leur détail n'étant pas nécessaire à la compréhension de l'invention.

Selon le mode de réalisation particulier présenté, le dispositif récepteur-décodeur 130 comprend en outre au moins une radio-étiquette 132.

Dans le mode de réalisation particulier présenté, où la radio-étiquette 132 est passive, la radio-étiquette peut par exemple être positionnée à l'extérieur du boitier du dispositif récepteur-décodeur 130 (par exemple par collage), sur une face apparente aux regards du dispositif récepteur-décodeur 130, ou encore être incorporée au boîtier du dispositif (par exemple lors d'un moulage du boîtier), de façon apparente (par exemple par un effet de transparence du boitier) ou de façon à être indécelable (notamment si le boîtier est de petit taille). L'énergie développée par l'antenne de la radio-étiquette 132, suite à l'émission d'ondes radiofréquences par un lecteur NFC, permet d'alimenter la radio-étiquette sans recourir à une source d'alimentation extérieure.

Dans d'autres modes de réalisation, la radio étiquette peut être alimentée par la propre source d'alimentation du dispositif récepteur-décodeur 130.

La figure 4 représente des détails architecturaux de la radio-étiquette 132 de la figure 1. La radio-étiquette 132 comprend une unité de contrôle CU 41 adaptée au contrôle de la radio-étiquette et notamment à l'interprétation des ordres reçus du terminal 110, une mémoire vive ou RAM (de l'anglais « Random Access Memory ») 46, et une mémoire non volatile de type ROM (de l'anglais « Read Only Memory ») 45, par exemple une mémoire, de type EEPROM (pour Electrically Erasable Programmable Read-Only Memory). La mémoire RAM est en particulier apte à une mémorisation d'au moins une information d'accès à un service offert par un serveur distant.

Selon un mode de réalisation, l'information d'accès comprend au moins :
- une adresse du service sur le serveur distant ;
   un identifiant d'accès au service comprenant au moins un identifiant relatif au produit auquel appartient la étiquette électronique.

Dans le mode de réalisation illustré, l'identifiant relatif au produit est un identifiant, connu du serveur, du dispositif récepteur-décodeur 130 auquel appartient la étiquette électronique 132.

Dans un autre mode de réalisation, éventuellement complémentaire, l'identifiant d'accès peut comprendre un identifiant de connexion d'un utilisateur du dispositif 130. Un tel identifiant peut être écrit dans la mémoire de la radio-étiquette lors de la création de la radio-étiquette, de la vente du produit qu'elle équipe, ou lors du premier accès de l'utilisateur du dispositif qu'elle équipe au service.

La radio-étiquette 132 comprend en outre une interface de communication 47. Selon le mode de réalisation particulier illustré, il s'agit d'une interface de communication sans-fil bidirectionnelle par radiofréquence, compatible par exemple avec le standard de communication en champs proches NFC. Elle comprend notamment une antenne radiofréquence 470.

Selon un mode de réalisation particulier, le contenu d'au moins une partie de la mémoire de la radio-étiquette est compatible avec un standard de formatage d'information, comme le standard NDEF (pour « NFC Data Exchange Format »).

Dans le mode de réalisation illustré, la mémoire RAM peut en particulier comprendre une zone mémoire non sécurisée 462 et zone mémoire sécurisée 464. L'information d'accès (et éventuellement l'identifiant complémentaire de sécurité) peut par exemple être contenue dans une zone mémoire non sécurisée, et la donnée d'authentification et la clé d'encryptage peuvent être contenue dans une zone mémoire sécurisée.

Un tel mode de réalisation peut par exemple permettre à un opérateur de déjouer certaines attaques visant à contourner une restriction d'accès au service offert par le serveur.

Une première attaque pourrait par exemple consister à enregistrer, lors d'un accès au site à accès limité, l'adresse (par exemple l'URL) du site pour y accéder ultérieurement (par exemple depuis le même terminal ou depuis un autre terminal dont l'utilisateur n'est pas l'un des utilisateurs du dispositif récepteur-décodeur).

Cependant, l'absence de réception de l'identifiant du dispositif récepteur-décodeur (et éventuellement l'absence d'un identifiant d'un terminal autorisé à utiliser le site) peut par exemple permettre de déjouer l'attaque, ou tout au moins de la limiter, en limitant de fait les possibilités d'accès au site aux seuls équipements situés à proximité du dispositif récepteur-décodeur 130.

Une seconde attaque pourrait par exemple consister à copier, dans une autre la radio-étiquette, l'adresse (par exemple l'URL) du site pour y accéder ultérieurement.

Cependant, l'absence de fourniture de l'identifiant du dispositif récepteur-décodeur ou d'un utilisateur du dispositif récepteur-décodeur, ou l'absence de réception d'une donnée d'authentification (soit par exemple parce que la radio-étiquette ne possède pas de zone mémoire sécurisée par clé, soit parce la clé fournie par le serveur ne permet pas d'accéder à la zone sécurisée, et éventuellement l'absence de fourniture d'un identifiant d'un terminal autorisé à utiliser le site, peut par exemple permettre là encore de déjouer l'attaque.

Une troisième attaque pourrait par exemple consister à obtenir par piratage (ou « hacking » selon la terminologie anglaise) la clé d'encryptage et à dupliquer la radio-étiquette, avec l'URL du site (et éventuellement l'identifiant d'accès et/ou l'identifiant d'un terminal autorisé à se connecter au site) pour y accéder ultérieurement.

Cependant, un mode de réalisation dans lequel la donnée d'authentification et/ou sa clé d'encryptage sont modifiées lors de chaque connexion au site peut par exemple permettre à nouveau de déjouer l'attaque.

## Revendications

1. Procédé d'authentification d'un accès depuis un terminal mobile à un service disponible sur un réseau de communication bidirectionnel, ledit terminal mobile comprenant au moins une première interface radiofréquence at au moins une seconde interface de communication avec un réseau bidirectionnel, ledit procédé étant **caractérisé en ce qu'**il comprend les étapes consistant à:
- acquérir au moins une information relative audit service contenue dans une radio étiquette et comprenant au moins:
• une adresse dudit service ;
• un identifiant d'accès audit service, comprenant au moins un identifiant relatif à un produit auquel appartient ladite radio-étiquette ;
- requérir un accès audit service via ladite adresse, en fournissant ledit identifiant d'accès.

2. Procédé d'authentification selon la revendication 1 **caractérisé en ce que** ledit procédé comprend en outre une étape consistant à authentifier ledit accès, authentifier ledit accès comprenant:
- demander une lecture d'au moins une donnée d'authentification comprise dans une zone mémoire, sécurisée par une clé d'encryptage, de ladite radio-étiquette, demander une lecture comprenant :
• fournir une clé candidate;
• obtenir ladite donnée d'authentification lorsque ladite clé candidate correspond à la clé d'encryptage sécurisant ladite zone mémoire ;
- transmettre ladite donnée d'authentification obtenue.

3. Procédé d'authentification selon la revendication 2 **caractérisé en ce qu'**authentifier ledit accès comprend recevoir ladite clé candidate par ladite seconde interface.

4. Procédé d'authentification selon la revendication 3 **caractérisé en ce que** :
- recevoir ladite clé candidate comprend en outre recevoir et mémoriser un identifiant complémentaire de sécurité, et
- l'étape consistant à requérir un service et/ou l'étape consistant à transmettre ladite donnée d'authentification obtenue comprend une étape consistant à fournir ledit identifiant complémentaire de sécurité mémorisé.

5. Procédé d'authentification selon l'une quelconque des revendications 1 à 4 caractérisé en que authentifier ledit accès comprend une étape consistant à affecter au moins une clé d'encryptage à la sécurisation d'au moins une zone mémoire de ladite radio-étiquette.

6. Procédé d'authentification selon la revendication 5 caractérisé en qu'il comprend une étape consistant à recevoir, par ladite seconde interface, ladite clé d'encryptage à affecter à la sécurisation de ladite zone mémoire de ladite radio-étiquette et/ou une adresse de ladite zone mémoire sécurisée.

7. Procédé d'authentification selon l'une quelconque des revendications 1 à 6 caractérisé en qu'il comprend une étape consistant à demander une écriture d'au moins une donnée d'authentification dans une zone mémoire sécurisée de ladite radio-étiquette.

8. Procédé d'authentification selon la revendication 7 caractérisé en qu'il comprend une étape consistant à recevoir, par ladite seconde interface, ladite donnée d'authentification à écrire et/ou ladite adresse de ladite zone mémoire sécurisée.
Procédé d'authentification selon l'une quelconque des revendications 1 à 8 caractérisé en qu'il est mis en oeuvre au moins partiellement par une application d'authentification dudit service téléchargée sur ledit terminal.

9. Terminal de communication comprenant au moins une première interface de communication radio fréquence et au moins une seconde interface de communication avec un réseau bidirectionnel, ledit terminal étant **caractérisé en ce qu'**il comprend un processeur configuré pour:
- acquérir au moins une information contenue dans une radio étiquette et comprenant au moins:
• une adresse d'un service disponible sur un réseau de communication bidirectionnel;
• un identifiant d'accès audit service, comprenant au moins un identifiant relatif à un produit auquel appartient ladite radio-étiquette ;
- requérir un accès audit service, via ladite adresse, en fournissant ledit identifiant d'accès.

10. Procédé d'autorisation d'accès à un service disponible sur un serveur appartenant à un réseau de communication bidirectionnel, ledit procédé étant mis en oeuvre sur ledit serveur et comprenant les étapes consistant à:
- recevoir une requête d'accès audit service, ladite requête comprenant au moins:
• une adresse désignant ledit service sur ledit serveur;
• un identifiant d'accès audit service, comprenant au moins un identifiant relatif à un produit auquel appartient ladite étiquette électronique ;
- comparer ledit identifiant d'accès avec au moins identifiant déterminé autorisant un accès audit service;
ledit procédé étant **caractérisé en ce qu'**il comprend les étapes consistant à:
- obtenir une association dudit identifiant déterminé avec au moins une donnée d'authentification et une clé d'encryptage de ladite donnée d'authentification, ladite donnée d'authentification et ladite clé d'encryptage ayant un format adapté à un stockage de ladite donnée d'authentification dans une zone mémoire, sécurisée par ladite clé d'encryptage, d'une radio-étiquette,
- recevoir une première donnée candidate ;
- autoriser un accès audit service lorsque ladite première donnée candidate reçue correspond à ladite donnée d'authentification associée audit identifiant déterminé.

11. Serveur appartenant à un réseau de communication bidirectionnel et comprenant un processeur configuré pour :
- recevoir une requête d'accès à un service disponible sur ledit serveur, ladite requête comprenant au moins:
• une adresse désignant ledit service sur ledit serveur;
• un identifiant d'accès audit service, comprenant au moins un identifiant relatif à un produit auquel appartient ladite radio-étiquette ;
- comparer ledit identifiant avec au moins identifiant déterminé autorisant un accès audit service;
ledit serveur étant **caractérisé en ce que** ledit processeur est en outre configuré pour :
- obtenir une association dudit identifiant déterminé avec au moins une donnée d'authentification et une clé d'encryptage de ladite donnée d'authentification, ladite donnée d'authentification et ladite clé d'encryptage ayant un format adapté à un stockage de ladite donnée d'authentification dans une zone mémoire, sécurisée par ladite clé d'encryptage, d'une radio-étiquette,
- recevoir une donnée candidate ;
- autoriser un accès audit service lorsque ladite donnée candidate reçue correspond à ladite donnée d'authentification associée au identifiant déterminé.

12. Produit programme d'ordinateur, **caractérisé en ce qu'**il comprend des instructions de code de programme pour exécuter le procédé d'authentification selon l'une quelconque des revendications 1 à 8 et/ou le procédé d'autorisation d'accès selon 1 revendication 10, lorsque ledit programme est exécuté par un ordinateur.

13. Support d'enregistrement lisible par un ordinateur sur lequel est enregistré un programme d'ordinateur comprenant des instructions de code de programme pour exécuter le procédé d'authentification selon l'une quelconque des revendications 1 à 6 et/ou le procédé d'autorisation d'accès selon la revendication 10, lorsque ledit programme est exécuté par un ordinateur.

14. Radio-étiquette comprenant une interface de communication radio fréquence, ladite radio-étiquette étant **caractérisé en ce qu'**elle est configurée pour une mémorisation d'au moins une information d'accès à un service offert par un serveur distant, ladite information comprenant au moins :
- une adresse dudit service sur ledit serveur distant ;
- un identifiant d'accès audit service comprenant au moins un identifiant relatif à un produit auquel appartient ladite radio-étiquette.

15. Produit comprenant une radio-étiquette selon la revendication 14.
